# FASCICULE DE BREVET EUROPEEN

(11) **EP 2 336 273 B1**
(45) Date de publication et mention de la délivrance du brevet: **19.06.2013**
(21) Numéro de dépôt: 10193432.1
(22) Date de dépôt: 02.12.2010
(51) Int. Cl.: C10G 11/18, B01J 8/24, B01J 8/32

(54) **Procédé de craquage catalytique avec maximisation des bases gazoles**
Katalytisches Krackverfahren mit Maximierung der Dieselbasen
Catalytic cracking method with maximisation of diesel bases

(30) Priorité: 14.12.2009 FR 0958955
(43) Date de publication de la demande: 22.06.2011
(73) Titulaire: Total Raffinage Marketing, 92800 Puteaux (FR)
(72) Inventeur: Bories, Marc, 76280, SAINT JOUIN DE BRUNEVAL (FR); Leroy, Patrick, 76430, SAINT VIGOR D'YMONVILLE (FR); Echard, Michael, 76290, MONTIVILLIERS (FR); Gauthier, Thierry, 69530, BRIGNAIS (FR)
(74) Mandataire: Largeau, Béatrice

(56) Documents cités:
- EP-A1- 0 180 291
- EP-A1- 0 265 347
- EP-A1- 1 413 622
- WO-A1-2006/020547
- FR-A1- 2 829 143
- US-A- 4 417 974

## Description

La présente invention concerne un procédé de craquage catalytique pour maximiser la production de bases gazoles comprenant une étape de réaction dans au moins un réacteur à lit fluidisé ascendant, une étape de séparation des hydrocarbures craqués et du catalyseur, une étape de fractionnement des hydrocarbures craqués et une étape de régénération du catalyseur coké. Elle concerne également les dispositifs de mise en oeuvre du dit procédé, celui-ci pouvant comprendre un ou plusieurs réacteurs ascendants.

Depuis de longues années les raffineurs et les sociétés offrant en licences des technologies FCC ou Fluidized Catalytic Cracking ou Craquage Catalytique Fluidisé travaillent à l'optimisation du fonctionnement de ces procédés et des unités correspondantes. Cette optimisation a tout d'abord été dirigée vers la production de produits légers gaz liquéfiés (ou GPL ou LPG : Liquefied petroleum gas), naphtas et essence, ces produits correspondant essentiellement soit au marché de polymères issus de la polymérisation d'oléfines légères, soit à la consommation majoritaire du parc automobile véhicules légers et véhicules lourds. Dans ce type de fonctionnement, la production de bases gazoles demeure limitée.

Le marché de l'automobile ayant fortement évolué, la consommation en produits de type gazoles s'étant largement accrue, il devient de plus en plus nécessaire d'orienter la production des raffineries vers la production de bases gazoles et de surtout limiter la production d'essence. Comme souvent, ces raffineries sont équipées d'unités de FCC, il est impératif de pouvoir convertir ces unités en unités favorisant la production de gazoles. La particularité des procédés FCC est de produire à la fois des gaz liquéfiés légers, des naphtas, des essences, des bases gazoles appelées LCO (ou light cycle oil en anglais), des bases plus lourdes très aromatiques et inutilisables en l'état appelées HCO (ou heavy cycle oil en anglais) et enfin des slurry ou boues hydrocarbonées utilisables notamment dans la constitution des revêtements routiers et plus souvent comme bases pour fioul lourd.

Dans le cadre de la présente invention, il s'agit de maximiser la production de bases gazoles dans les unités de craquage catalytique en lit fluidisé ou FCC tout en limitant la production d'essence, en maximisant ou en maintenant la quantité en gaz légers ou LPG et enfin, en limitant la formation du slurry et cela sans changer drastiquement l'agencement des unités FCC existantes. Cette invention s'applique à la modernisation des unités FCC existantes ou même à des unités neuves sans bouleversements significatifs des éléments essentiels de l'unité.

Dans l'état de la technique, il est d'usage d'opérer ces unités en mode maxi essence ou maxi conversion pour produire majoritairement de l'essence à partir de coupes pétrolières provenant de la distillation de pétrole brut, préférentiellement à partir de distillat sous vide et/ou de résidu atmosphérique ou sous vide, pris seuls ou en mélange, ces coupes étant éventuellement hydrotraitées.

Pour augmenter la quantité et la qualité de distillat correspondant à un intervalle de températures variant de 145 à 400°C à partir de ces mêmes charges dans une unité de craquage catalytique en lit fluidisé, il est nécessaire de baisser le niveau de la conversion dans l'unité, la mesure du cétane étant caractéristique de la qualité du distillat ainsi produit. Malheureusement, il est connu de l'homme du métier que la baisse du niveau de conversion de l'unité de craquage catalytique conduit inévitablement à la production en quantité importante de produits lourds moins valorisables, appelés HCO (ou heavy cycle oil ; huile lourde de craquage) et/ou slurry, c'est-à-dire toute molécule distillant typiquement au dessus de 330°C, de préférence au dessus de 350°C. La coupe HCO correspond en général à un intervalle de 350 à 450°C tandis que le slurry correspond à une coupe distillant à plus de 450°C, soit 450°C⁺.

Pour ainsi modifier la conversion dans le réacteur, on peut agir sur l'activité du catalyseur et donc sur son efficacité à convertir la charge hydrocarbonée à la température de réaction catalytique dans le réacteur ascendant (ou riser en anglais). Deux solutions s'offrent à l'homme du métier :
- soit faire circuler dans l'unité un catalyseur peu actif de surface spécifique modérée ou faible, par exemple inférieure à 110m²/g, favorisant la conversion de fond des composants les plus lourds de la charge et limitant la conversion de la charge, mais avec un rendement en gaz secs et gaz liquéfiés ou LPG trop faible (typiquement inférieur à 15%).
- Soit modifier la surface active du catalyseur par cokage, en utilisant un catalyseur acide du marché, par exemple ceux utilisés actuellement pour des marches maxi essence, pour le rendre moins actif avant l'introduction de la charge fraîche dans le réacteur et ainsi limiter sa conversion.

Cette deuxième solution est généralement privilégiée, les autres catalyseurs moins convertissant n'étant pas ou plus disponibles sur le marché.

Afin de modifier l'activité de la masse catalytique à l'intérieur du réacteur en lit fluidisé au niveau de l'injection de charge, il a été imaginé d'introduire à l'intérieur du réacteur ascendant au moins un flux de catalyseur partiellement coké, de préférence deux flux de catalyseurs de vitesses et de températures différentes, le premier formé essentiellement de catalyseur régénéré et le second de catalyseur coké. Ce flux ou ces deux flux constitue(nt) une masse catalytique d'activité contrôlée qui, mise en contact avec la charge, permet un craquage optimisé de celle-ci pour une sélectivité recherchée en distillat.

Par exemple, le brevet US7008527 de IFP décrit une alimentation étagée du réacteur ascendant en catalyseur régénéré au moyen d'un tube disposé co-axialement dans le bas du réacteur, le catalyseur conservant un schéma de circulation classique, comme dans une unité de FCC traditionnelle. Une première zone d'introduction du catalyseur située à la base du riser, comme dans le schéma d'une unité FCC conventionnelle, permet d'assurer la production de bases essence et gazole ainsi que celle des autres coupes issues d'une unité FCC conventionnelle. Une seconde alimentation de catalyseur régénéré, située plus haut dans le réacteur ascendant que la première, est mise en contact avec une charge spécifique et va permettre moyennant certaines conditions opératoires, d'apporter un supplément d'activité qui, en fonction de la dite charge spécifique additionnelle, conduit à une réaction de craquage plus poussée se traduisant par une augmentation de la production d'oléfines et une diminution de la formation de distillat. L'injection de fluide inerte permet de refroidir la réaction en cours et surtout de bloquer les mécanismes des réactions de craquage en favorisant la production de propylène.

Le brevet US 4.417.974 de Chevron propose une méthode de craquage de composés désactivateurs de catalyseur en utilisant un tube situé à l'intérieur du riser disposé de manière sensiblement coaxiale à celui-ci. Ce tube est co-alimenté par une partie du catalyseur régénéré et une charge hydrocarbonée dans des conditions de craquage douces puisque la température à l'intérieur du tube central est comprise entre 400 et 500 °C, permettant de limiter le cokage du catalyseur. L'autre partie du catalyseur qui circule à l'extérieur du tube coaxial est mise en contact avec la charge principale additionnée de composés désactivateurs de catalyseur, injectée à la paroi du riser. Les flux de catalyseur de même densité issus du tube central et de la partie annulaire se rejoignent à un niveau relativement élevé du réacteur ascendant. Les composés désactivateurs de catalyseurs sont constitués de fractions hydrocarbonées de point d'ébullition supérieur à 600°C et des recycles d'hydrocarbures ayant déjà été craqués, ces composés étant fortement concentrés en asphaltènes et en composés azotés et soufrés.

Dans le brevet Mobil EP0180291, on décrit un procédé qui consiste à séparer le catalyseur fraîchement régénéré dans deux cavités successives en bas du réacteur ascendant. La première zone, ayant la forme d'un venturi, permet la mise en contact de la charge avec une partie du catalyseur fraîchement régénéré, cette première zone favorisant également l'accélération du catalyseur et de l'huile vaporisée dans le réacteur. L'autre partie du catalyseur régénéré est alors ségréguée à l'extérieur du venturi. Dans la première zone, il y a désactivation partielle du catalyseur et vaporisation d'huile, suite à l'injection de la charge à ce niveau. A la sortie du venturi, l'huile vaporisée et le catalyseur partiellement désactivé rentrent en contact avec le catalyseur de seconde zone toujours très chaud et actif, la réaction de craquage va se poursuivre. Ici on vise à minimiser les surchauffes locales, génératrices de coke par sur-craquage, par vaporisation incrémentale de la charge dans le but de favoriser la production de produits légers tels que les essences et les produits plus légers, gaz secs et LPG.

Dans le brevet FR 2829143 de China Petroleum, on décrit un procédé de craquage catalytique susceptible de traiter simultanément des huiles lourdes et des huiles légères en introduisant ces deux charges dans deux cavités distinctes mais concentriques remplies du même catalyseur régénéré, lé réacteur se présentant sous la forme d'un double tube. Comme pour les précédents brevets, le but visé est la maximisation des coupes essences.

WO 2006/020547 décrit un procédé de craquage catalytique permettant d'obtenir un distillat moyen.

Contrairement aux procédés et dispositifs décrits précédemment, le but de la présente invention est de maximiser la formation de base gazoles pour satisfaire les nouvelles demandes du marché en produits types gazoles tout en minimisant la fabrication de bases essence. En outre, il ne s'agit pas de changer la configuration des réacteurs existants mais de changer leur mode de fonctionnement par des modifications mineures, un retour vers la production en maxi essence pouvant être possible à tout moment. En outre, le fonctionnement visant à maximiser les bases gazoles ou distillats moyens, ne doit pas détériorer la production de coupes légères telles que les gaz liquéfiés, tout en limitant autant que possible la production d'essence.

La présente invention a donc pour objet un procédé de craquage catalytique pour maximiser la production de bases gazoles selon la revendication 1 et comprenant une étape de réaction de craquage dans un réacteur à lit fluidisé ascendant, une étape de séparation des hydrocarbures craqués et du catalyseur coké, une étape de fractionnement des hydrocarbures craqués et une étape de régénération du dit catalyseur coké caractérisé en ce que on injecte la charge hydrocarbonée dans le réacteur ascendant sur une masse catalytique constituée de catalyseur partiellement désactivé par cokage d'au moins une partie de celui-ci dans ce même réacteur ascendant, de façon à ce que la température de réaction (ou TRX) des effluents en sortie du dit réacteur varie de 470 à 600°C. Ce cokage peut être fait avant injection de la charge ou immédiatement après.

On entend ici par étape de séparation qui se fait dans un séparateur, une étape qui permet à la fois ou successivement de séparer les effluents gazeux de craquage des grains et/ou fines de catalyseur et de stripper le catalyseur. Lorsqu'on strippe le catalyseur, on déplace les fractions légères encore présentes sur ou dans le catalyseur, par exemple sous l'action de la vapeur d'eau.

Un premier avantage de la présente invention est de pouvoir s'appliquer aux unités existantes, moyennant des modifications limitées de celles-ci, tout en utilisant les catalyseurs disponibles sur le marché, généralement très actifs maximisant la production d'essences.

Un deuxième avantage est sa réversibilité : comme on utilise une même unité et un même catalyseur, il est toujours possible de faire marche arrière et de nouveau maximiser l'essence si le marché évolue en sens inverse. On peut ainsi utiliser des catalyseurs acides à pores microporeux et mésoporeux dont le rapport des surfaces spécifiques microporeux sur mésoporeux est de 1 à 6, de préférence de 1 à 4, de manière davantage préférée de 3 à 4.

La surface spécifique pourra être mesurée selon la méthode BET (pour Brunauer Emmet et Teller).

Un troisième avantage est qu'on maintient la production en gaz secs et gaz liquéfiés, en particulier celle de propylène.

Un quatrième avantage est l'épuisement possible des composés à température d'ébullition supérieure à 350°C, c'est-à-dire l'épuisement du HCO et du slurry.

Un cinquième avantage est que l'équilibre thermique de l'unité est conservé, malgré des températures de réactions faibles, typiquement entre 470 et 515°C. Comparativement, en mode de production maxi essence la température de réaction est rarement inférieure à 525°C pour un même catalyseur acide. Par contre, Si des catalyseurs de très faible activité étaient utilisés, la température de réaction nécessaire serait plus proche de 600°C que de 490°C.

Pour atteindre cette température de réaction, un premier moyen selon la présente invention est d'injecter au moins un composé hydrocarboné de température d'ébullition supérieure ou égale à 350°C, sur au moins une partie du catalyseur régénéré, cette partie étant délimitée par au moins une zone définie au moyen d'un dispositif interne. Parmi les composés hydrocarbonés, du HCO et/ou du slurry produits par la réaction de craquage sont récupérés à l'étape de fractionnement afin de coker au moins une partie du catalyseur régénéré, dans au moins une des zones délimitées au moyen du dit dispositif interne en fond du réacteur ascendant de l'étape réactionnelle. Le cokage préalable d'une partie du catalyseur puis le mélange de celui-ci avec du catalyseur régénéré permet ainsi de contrôler la teneur en carbone résiduel sur la masse catalytique ou CRC (Carbon on Regenerated Catalyst en anglais), donc son activité et enfin le taux de conversion de la charge hydrocarbonée injectée dans le réacteur ascendant.

On ne sortirait pas du cadre de l'invention si ce pré-cokage du catalyseur pouvait être fait au moyen d'une charge hydrocarbonée classique, par exemple la même que celle injectée sur la masse catalytique partiellement cokée.

Dans un mode préféré, le recycle de HCO est particulièrement recherché non seulement pour limiter la conversion du catalyseur par pré-cokage, mais aussi parce qu'il est de meilleure qualité et présente un potentiel de craquage supérieur. En effet, le HCO résultant d'un craquage à basse conversion contient un potentiel de LCO important, d'environ 15 à 40%, de préférence de 20 à 30% en poids et il est produit en volume plus important.

L'utilisation d'un dispositif interne déjà pratiquée permet de délimiter des zones dans lesquelles on peut faire convertir des hydrocarbures différents dans des conditions sévères mais contrôlées. Par exemple, on peut opérer des catalyseurs du marché régénérés, à des températures de réaction supérieures à 525°C, et dans un rapport C/O (rapport pondéral catalyseur sur huile ou Cat to Oil en anglais) variant de 5 à 20, voir au-delà. Ces conditions sévères favorisent le cokage des charges de type HCO et/ou slurry sur le catalyseur, le coke couvrant en partie les sites actifs du catalyseur et diminuant ainsi son activité de façon contrôlée. L'ajustement des quantités respectives de catalyseurs cokés et de catalyseur issu d'une deuxième zone délimitée par le dispositif interne avant l'injection de la charge hydrocarbonée dans le réacteur ascendant permet d'adoucir les conditions de craquage en maximisant la production de distillats, principalement de LCO. Cet ajustement des quantités de grains de catalyseur cokés et non cokés vise l'obtention d'un coefficient moyen de carbone résiduel (ou CRC) sur l'ensemble des grains de la masse catalytique rencontrant la charge variant de 0.2 à 0.7. Le type de charge craquée est classique, celle-ci demeurant généralement constituée de résidus sous vide (RSV), de distillats atmosphérique (RAT) de pétrole brut et/ou de gazoles sous vide (VGO ou vacuum gas oil en anglais). Elle peut également comprendre tout dérivé hydrocarboné issu de la conversion du pétrole brut et/ou tout dérivé de la biomasse.

Un autre moyen d'obtenir un coefficient CRC moyen du même ordre de grandeur que précédemment est de renvoyer une partie du catalyseur coké séparé, puis strippé au cours de l'étape de séparation, dans le réacteur ascendant en amont, au niveau et/ou en aval de l'injection de charge hydrocarbonée à une température égale ou inférieure à la température de réaction.

Dans la configuration où le recycle d'hydrocarbures présente un point d'ébullition supérieur à 350°C, le cokage contrôlé du catalyseur est obtenu en ajustant le débit de ce recycle, la composition de ce recycle et/ou les conditions opératoires C/O et TRX).

Dans ce mode de réalisation de l'invention, la présence de catalyseur coké permet de diminuer l'activité du catalyseur à l'injection de la charge par effet de dilution du catalyseur déjà présent dans le réacteur.

En amont, ou au niveau de l'injection de la charge hydrocarbonée à craquer, ce recycle permet le pré-cokage d'une partie du catalyseur. En aval, de préférence à proximité de l'injection de la charge, il permet une meilleure vaporisation de la charge en augmentant la température de mélange du catalyseur et de la charge au niveau de l'injection ; c'est l'effet MTC (ou mixed temperature control) solide.

On ne sortirait pas du cadre de l'invention, si on combinait ce recycle de catalyseur avec une multiplicité d'injections de coupes hydrocarbonées différentes le long du réacteur ascendant en amont de l'injection de charge, en aval ou en amont de ce recycle.

Le recycle du catalyseur coké peut être réalisé soit par recycle externe, soit par recycle interne. Le recycle externe consiste à faire circuler le catalyseur coké du séparateur à l'extérieur du réacteur ascendant dans lequel il est réinjecté. Le recycle interne s'effectue par reflux interne du catalyseur coké dans le réacteur ascendant, l'injection du catalyseur coké se faisant sans circulation du catalyseur coké à l'extérieur du dit réacteur. Dans les deux cas, le recycle favorise la conversion de fond par augmentation du C/O et la vaporisation de la charge si placé en aval de celle-ci. Il assure un certain pré-cokage du catalyseur au niveau de la paroi du réacteur, les hydrocarbures craqués étant accélérés au centre du réacteur. Pour promouvoir davantage l'effet MTC, il faut diminuer la température du catalyseur recyclé en disposant un refroidisseur sur le recycle externe et/ou injecter un liquide type essence au niveau du stripage du catalyseur coké. Cette dernière option s'applique également au recycle interne.

Un autre mode de réalisation de l'invention est de combiner les effets de ces deux actions. Ainsi, une partie du catalyseur régénéré est cokée en amont de l'injection de la charge par au moins un composé hydrocarboné de température d'ébullition supérieure ou égale à 350°C, éventuellement en présence d'un dispositif interne, et une partie du catalyseur coké et strippé, récupéré dans le séparateur est renvoyée en amont, au niveau et/ou en aval de l'injection de la charge dans le réacteur ascendant. On ne sortirait pas du cadre de l'invention si plusieurs coupes de nature différente étaient injectées en amont de la charge.

Il sera aisé à l'homme du métier en adaptant judicieusement les conditions opératoires, température de réaction, circulation de catalyseur ou encore pression partielle des hydrocarbures injectés ou recyclés dans le réacteur ascendant, de maximiser la production de distillat. Il lui sera possible de moduler le cokage du catalyseur par un contrôle du débit du composé hydrocarboné et de la quantité de catalyseur coké recyclé pour ajuster les conditions de craquage de la charge dans le réacteur ascendant. Typiquement, on vise des conditions de craquage correspondant à un CRC moyen variant de 0.2 à 0.7, et un C/O inférieur à 5, de préférence de l'ordre de 4.

Dans un mode préféré de l'invention, on recycle de 1 à 100% des hydrocarbures de coupe de distillation supérieure ou égale à 350°C, typiquement les coupes HCO et slurry récupérées en sortie de l'étape de fractionnement, sur 1 à 100% en poids de catalyseur régénéré introduit en fond de réacteur ascendant. On ne sortirait pas du cadre de l'invention si la charge fraîche était elle-même utilisée.

Dans un autre mode de réalisation de l'invention, susceptible d'être combiné avec le précédent, 1 à 75% en poids du catalyseur coké et strippé, récupéré au cours de l'étape de séparation est recyclé vers le réacteur ascendant en amont, au niveau et/ou en aval de l'injection de la charge.

Pour maintenir ou même augmenter le rendement en gaz liquéfiés et en gaz secs, on injecte au moins une coupe de température d'ébullition inférieure à 160°C sur du catalyseur régénéré dans le réacteur ascendant en amont de l'injection de la charge. De préférence, ces recycles composés d'essences légères ou LCN (light cracked naphtas en anglais), sont injectés dans la partie du réacteur ascendant où les conditions de craquage sont les plus sévères. Typiquement, la température de réaction y sera très supérieure à 525°C et le rapport C/O sera très supérieur aux rapports C/O habituellement utilisés pour maximiser la conversion de ces coupes sans significativement altérer l'activité du catalyseur, celles-ci produisant peu de coke.

Pour augmenter la capacité de craquage du procédé selon l'invention et surtout contrôler de manière optimale le craquage de la charge, le procédé selon l'invention comprend une étape de réaction de craquage supplémentaire en réacteur ascendant, travaillant en parallèle à la première étape de réaction. Dans ce deuxième réacteur ascendant, on recycle sur du catalyseur régénéré venant du régénérateur, des coupes hydrocarbonées de point d'ébullition inférieur ou égal à 160°C, de préférence inférieur à 145°C, et/ou des coupes hydrocarbonées de température d'ébullition supérieure ou égale à 330°C, de préférence supérieure à 350°C. Ces coupes hydrocarbonées sont choisies parmi les coupes issues du fractionnement de l'unité de craquage catalytique elle-même, des unités de conversion et/ou de distillation de pétrole brut, y compris des coupes dérivées de la biomasse. De préférence, certaines des coupes peu valorisables ou non souhaitées, récupérées à l'étape de fractionnement suivant la première étape de craquage de la charge, sont recyclées et injectées dans le réacteur ascendant de la deuxième étape de réaction. Les conditions de craquage de ces coupes hydrocarbonées sont variables selon la nature des composés hydrocarbonés recyclés: les rapports C/O peuvent varier 4 à 20 et même au delà, et les températures de réaction de 470 à 650°C.

Un autre objet de la présente invention est le dispositif selon la revendication 10 de mise en oeuvre du procédé comprenant au moins un réacteur ascendant, équipé d'un dispositif interne disposé en fond du réacteur proche de l'arrivée de catalyseur régénéré, un séparateur des effluents de craquage et du catalyseur coké, un régénérateur et un dispositif de fractionnement, ces différents dispositifs étant reliés pour permettre la circulation des fluides et/ ou du catalyseur entre eux, caractérisé en ce qu'il comprend des conduites de recycles de coupes hydrocarbonées de point d'ébullition inférieur ou égal à 160°C et/ou de coupes hydrocarbonées de température d'ébullition supérieure ou égale à 350°C dans le réacteur ascendant, au niveau du dispositif interne et/ou des moyens de recycle du catalyseur coké présent dans le séparateur, vers le réacteur ascendant.

Le dispositif interne peut être disposé en en amont de l'injecteur de charge dans le dit réacteur.

Selon un mode de réalisation, le dispositif selon l'invention pourra comprendre des conduites de recycles de coupes hydrocarbonées de température d'ébullition supérieure ou égale à 350°C dans le réacteur ascendant, au niveau du dispositif interne disposé en en amont de l'injecteur de charge dans le dit réacteur, et/ou des moyens de recycle du catalyseur coké présent dans le séparateur, vers le réacteur ascendant.

Selon un autre mode de réalisation, le dispositif selon l'invention pourra comprendre des conduites de recycles de coupes hydrocarbonées de point d'ébullition inférieur ou égal à 160°C dans le réacteur ascendant, au niveau du dispositif interne disposé en en amont de l'injecteur de charge dans le dit réacteur, et/ou des moyens de recycle du catalyseur coké présent dans le séparateur, vers le réacteur ascendant.

Selon encore un autre mode de réalisation, le dispositif selon l'invention pourra comprendre des conduites de recycles dans le réacteur ascendant de coupes hydrocarbonées de température d'ébullition supérieure ou égale à 350°C et des conduites de recycles dans le réacteur ascendant de coupes hydrocarbonées de point d'ébullition inférieur ou égal à 160°C, au niveau du dispositif interne disposé en en amont de l'injecteur de charge dans le dit réacteur, et/ou des moyens de recycle du catalyseur coké présent dans le séparateur, vers le réacteur ascendant.

Dans un premier mode de réalisation, le dispositif interne est positionné dans le réacteur ascendant pour définir un compartiment (X) dont la section varie de 10 à 90% de celle du réacteur ascendant, pour une longueur variant de 0.5m à la moitié de la hauteur du dit réacteur ascendant.

De façon préférée, le dispositif interne est constitué d'un tube disposé co-axialement au réacteur ascendant et/ou au moins d'une plaque de séparation fixée dans le réacteur ascendant parallèle à l'axe de celui-ci, de préférence deux plaques parallèles et/ ou croisées.

Dans un mode de réalisation du dispositif selon l'invention, la (ou les) conduite(s) de recycle des coupes hydrocarbonées de point d'ébullition inférieur ou égal à 160°C et/ou de coupes hydrocarbonées de température d'ébullition supérieure ou égale à 350°C, débouchent à la base du réacteur ascendant, à l'intérieur ou à l'extérieur du dit compartiment (X).

Selon un autre mode de réalisation, le dispositif comprend des moyens de recycle interne ou externe du catalyseur coké et strippé dans le séparateur vers le réacteur ascendant. Un premier moyen de recycle est une conduite de recycle externe du catalyseur coké et strippé du séparateur vers le réacteur ascendant. Cette conduite de recycle arrive en amont, au niveau et/ou en aval de l'injecteur de la charge dans le réacteur ascendant, cette conduite étant éventuellement équipée d'un refroidisseur (catcooler en anglais). On ne sortirait pas du cadre de l'invention, si on substituait à ce refroidisseur ou si on ajoutait un dispositif de trempe du catalyseur au moyen d'un ou plusieurs liquides hydrocarbonés (quench en anglais).

Un deuxième moyen de recycle de catalyseur coké et strippé est d'utiliser un réacteur ascendant dont les parois de l'extrémité supérieure comprennent au moins une ouverture (20) de taille éventuellement variable, par exemple en utilisant des vannes à bouchon (ou plug valve en anglais), ou tout autre système. Ces ouvertures permettent de renvoyer directement à l'intérieur du réacteur ascendant, des grains du dit catalyseur coké et strippé à partir du lit dense du dit séparateur, à ce niveau la pression dans le séparateur étant supérieure à celle en tête de réacteur.

Selon un mode complémentaire de l'invention, le dispositif comprend un deuxième réacteur disposé en parallèle au premier réacteur ascendant, raccordé au régénérateur par sa partie inférieure via une première conduite et au séparateur par sa partie supérieure via la seconde conduite. Ce deuxième réacteur comprend des conduites d'injection de distillats, disposées le long du dit réacteur de façon étagée ou non. Pour rappel, ces distillats sont principalement des coupes hydrocarbonées de faible point d'ébullition et des distillats de température d'ébullition élevée, par exemple des recycles des coupes hydrocarbonées non voulues, obtenus dans l'unité de fractionnement.

Pour faciliter la compréhension des différents éléments nécessaires au bon fonctionnement du dispositif selon l'invention les figures 1 à 6 sont données, mais ne pourront constituer une vision limitative de celui-ci.
La figure 1 est un schéma d'une unité comportant un réacteur ascendant comprenant un recycle d'hydrocarbures lourds de température supérieure à 350°C de type HCO et/ou slurry.
La figure 2 est un schéma d'une unité comportant un recycle externe d'une partie du catalyseur coké et strippé, de la capacité de séparation vers le réacteur ascendant, le positionnement d'un recycle de produits lourds de type HCO et/ou slurry étant optionnel.
La figure 3 est un schéma d'une unité comportant un recycle interne d'une partie du catalyseur coké, de la capacité de séparation vers le réacteur ascendant, le positionnement d'un recycle de produits lourds de type HCO et/ou slurry étant optionnel.
La figure 4 est un schéma d'une unité comportant un deuxième réacteur ascendant parallèle au premier réacteur avec positionnement des recycles de produits légers type essence légère (LCN) et de produits lourds de type HCO et/ou slurry.
Les figures 5a à 5d illustrent une vue en coupe de différents dispositifs internes pouvant délimiter une ou plusieurs zones distinctes dans lesquelles pourraient être injectées une ou plusieurs coupes hydrocarbonées en amont de l'injection de la charge fraîche.
La figure 6 illustre clairement l'impact du carbone encore présent sur le catalyseur sur son activité catalytique. L'invention proposée ici repose sur ces observations montrant une baisse d'activité catalytique liée à la présence de carbone résiduel.

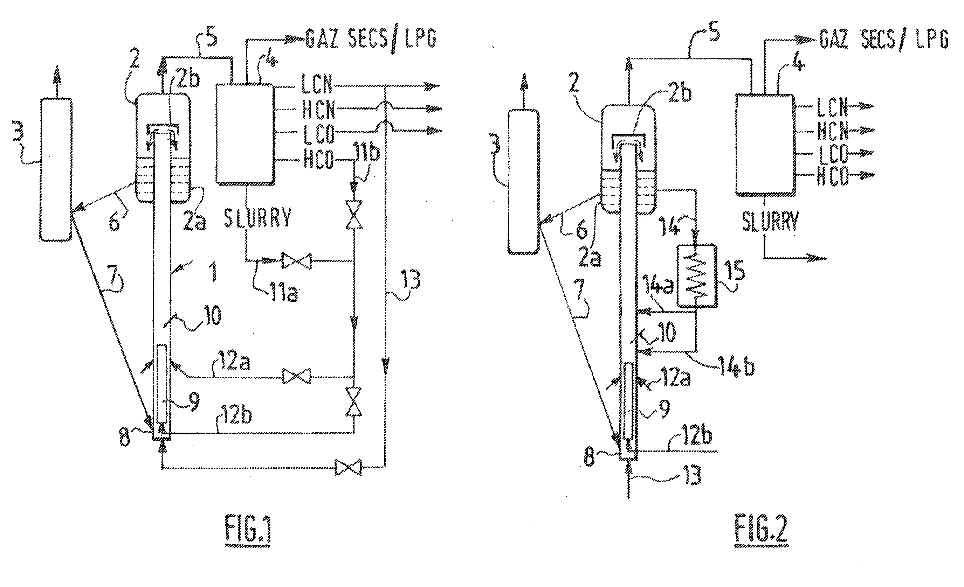

Dans la figure 1, le dispositif selon l'invention est une unité de FCC schématisée comprenant un réacteur ascendant (1), un séparateur (2) des produits de craquage et du catalyseur coké, comprenant un strippeur (2a) et un séparateur gaz/solides (2b), un régénérateur (3) et une unité de fractionnement (4) alimentée via une conduite (5) par les fluides du séparateur (2). Le catalyseur coké du séparateur (2) est dirigé vers le régénérateur (3) via la conduite (6) et le catalyseur régénéré sortant du régénérateur (3) est dirigé via la conduite (7) en bas du réacteur ascendant (1). Un dispositif interne sous forme de tube co-axial (9), est disposé en fond du réacteur (1) à proximité de l'arrivée (8) via la conduite (7) du catalyseur régénéré dans le réacteur (1), ce tube (9) permettant de ségréguer deux flux de catalyseurs distincts, le flux interne au tube (9) et le flux annulaire compris entre la paroi externe du tube (9) et la paroi interne du réacteur (1). Le niveau d'injection de la charge dans le réacteur (1) est référencé en (10) au-dessus du tube (9).

A la sortie de l'unité de fractionnement (4) sont représentées les lignes de soutirage des différents effluents de craquage, les effluents lourds de HCO et slurry étant ramenés seuls ou en mélange via les conduites (11b) et (11a) puis les conduites (12b) et (12a) respectivement à l'intérieur du tube (9) ou dans la partie annulaire entre le tube (9) et la paroi interne du réacteur (1). Une partie de l'essence légère ou LCN issue de l'unité de fractionnement (4) est recyclée par la conduite (13) en fond de réacteur (1) au niveau de l'injecteur de vapeur permettant l'élévation du catalyseur dans le réacteur (1) mais non représenté dans la figure 1.

De préférence, les effluents lourds type HCO sont recyclés dans la cavité annulaire via la conduite (12a) et les coupes légères dans l'intérieur du tube (9) via la conduite (12b), et la charge est injectée en périphérie du tube (9) au dessus de ce dernier.

Dans la figure 2 sont principalement représentés les recycles externes de catalyseur coké du séparateur (2) vers le réacteur (1) via une conduite (14) sur laquelle un refroidisseur (15) peut être optionnellement installé, le catalyseur refroidi pouvant être réintroduit via les conduites (14a) et (14b) soit en aval, soit au niveau (non représenté), soit en amont de l'injecteur de charge (10). La figure 2 suggère que des recycles de produits lourds et légers sont envisageables concomitamment avec le recycle externe de catalyseur coké dans le réacteur (1).

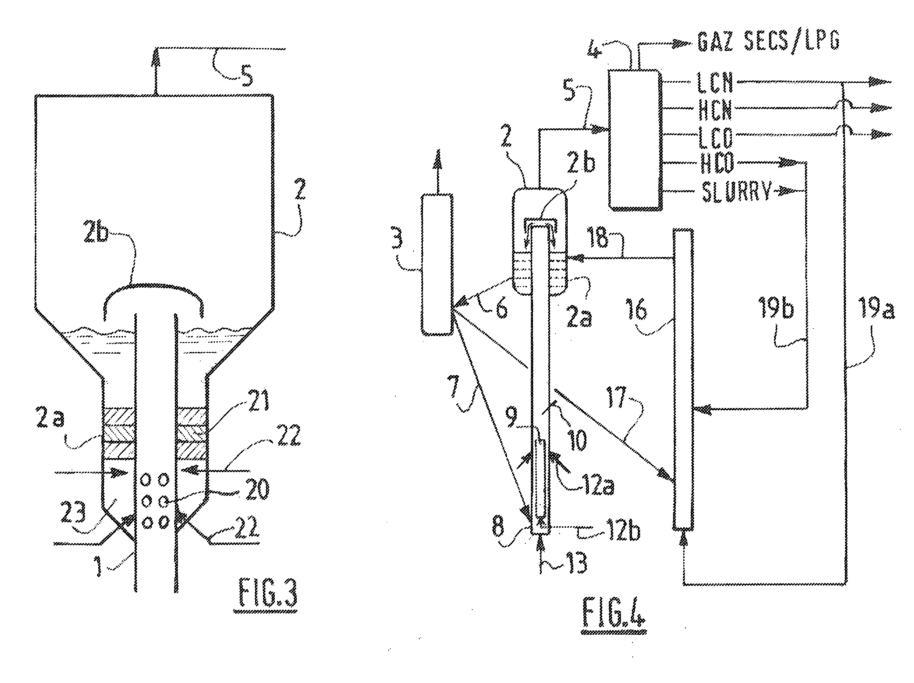

La figure 3 représente un dispositif permettant la recirculation interne du catalyseur coké et strippé ou recycle interne, à partir du séparateur (2), dans la partie haute du réacteur (1). Ici, une partie du réacteur (1) est disposée à l'intérieur du séparateur (2), centrée ou excentrée par rapport à l'axe de ce dernier. Dans la partie du réacteur (1) complètement immergée dans le lit dense de catalyseur coké et strippé (23), c'est-à-dire dépourvu d'effluents hydrocarbonés gazeux, à la base du séparateur (2), une ou plusieurs ouvertures (20) sont percées dans les parois de l'extrémité supérieure du réacteur (1). Ces ouvertures sont de taille suffisante pour laisser passer les grains de catalyseur coké et strippé dans le réacteur (1). Ces ouvertures (20) sont situées de préférence au dessus des injecteurs de stripage et/ou de fluidisation (non représentés) du catalyseur coké dans le séparateur (2), généralement sous forme d'anneau utilisé pour distribuer de la vapeur ou des hydrocarbures légers dans le lit de catalyseur coké pour entraîner et séparer des grains, les hydrocarbures craqués encore piégés sur les grains cokés, mais aussi pour abaisser leur température. Parce que le lit catalytique à ce niveau est bien fluidisé, on peut alors renvoyer aisément dans le réacteur via ces ouvertures des grains de catalyseur complètement dépourvu d'effluents hydrocarbonés, la pression dans le séparateur à ce niveau étant supérieure à celle du réacteur ascendant au niveau des ouvertures.

Pour faciliter cette étape, un packing spécifique ou dispositif diviseur de particules et d'effluents vaporisés (21), entourant l'extrémité de la tête du réacteur (1) peut être ajouté au dessus des injecteurs de vapeur ou d'effluents (22).

Le ou les orifices (20) peuvent avoir une taille fixe ou une ouverture variable, réglée par exemple par une ou des vannes, par exemple de type à bouchon avec un actionneur externe au séparateur (2) non représenté, afin d'ajuster le C/O et le CRC du catalyseur circulant dans le réacteur (1).

La figure 4 représente un dispositif tel que décrit dans les figures précédentes dans lequel on rajoute un deuxième réacteur ascendant (16) recevant via la conduite (17) du catalyseur régénéré venant du régénérateur (3), et dont le catalyseur coké en tête du réacteur (16) est ramené via la conduite (18) directement dans le séparateur (2). Des recycles d'une partie des effluents légers et lourds en sortie du fractionnement (4) sont ramenés dans le réacteur (16) via respectivement les conduites (19a) et (19b).

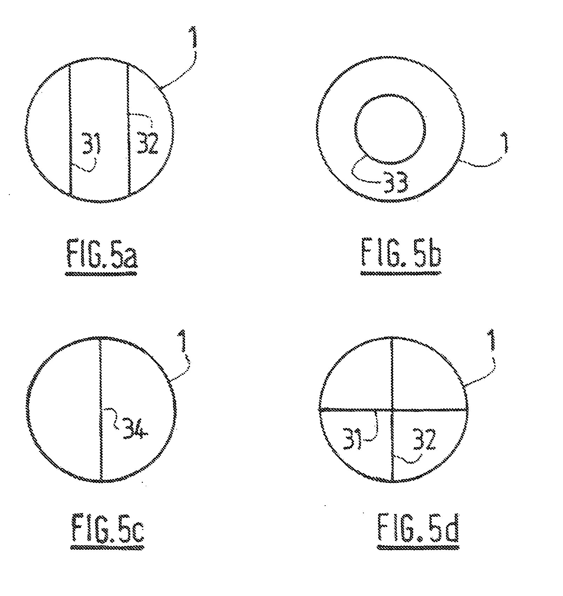

A la lueur de ces différentes figures, un mode préféré du dispositif selon l'invention, est l'utilisation d'un dispositif interne, par exemple sous forme d'un tube (9) disposé co-axialement au réacteur ascendant (1). Cependant, d'autres exemples de configuration des dispositifs internes selon l'invention sont donnés dans les figures 5a à 5d. Il s'agit par exemple d'un dispositif formé de deux plaques (31), (32) parallèles entre elles, disposées symétriquement par rapport à l'axe du réacteur (1) et parallèlement à cet axe (figure 5a), d'un tube (33) concentrique au réacteur (1) (figure 5b), d'une plaque unique (34) centrée sur l'axe du réacteur (1) et parallèle à ce dernier (figure 5c) ou encore de deux plaques (31, 32) parallèles à l'axe du réacteur et croisées (figure 5d). Ces dispositifs ont pour but de créer un ou plusieurs compartiments (X) ici (9) de section représentant 10 à 90% de la section du réacteur ascendant (1) et dont la longueur est de 0,5m à la moitié de la hauteur du dit réacteur ascendant (1). S'il s'agit d'un tube interne, la conduite de recycle des effluents lourds débouche à la base, à l'intérieur du dit tube (9) ou dans l'espace annulaire délimité par le réacteur (1) et l'extérieur du dit tube (9). On comprend qu'il est possible de recycler plusieurs coupes hydrocarbonées, par exemple les effluents légers dans les différentes sections définies par le dispositif choisi, par exemple une par section.

Pour maintenir, voire augmenter la production de gaz secs et de LPG, ou même limiter la production d'effluents lourds, HCO et slurry, il est avantageux d'ajouter à l'unité telle que représentée dans les figures 1, 2 ou 3, un deuxième réacteur (16) disposé en parallèle au premier (1) raccordé au régénérateur (3) par sa partie inférieure via la conduite (17) et au séparateur (2) par sa partie supérieure via la conduite (18) et comprenant des conduites d'arrivés des distillats recyclés (19a, 19b) ces conduites étant disposées le long du dit réacteur, les conduites de recycle des distillats de faibles point d'ébullition étant disposés en amont des conduites de recycles des distillats de températures d'ébullition élevées.

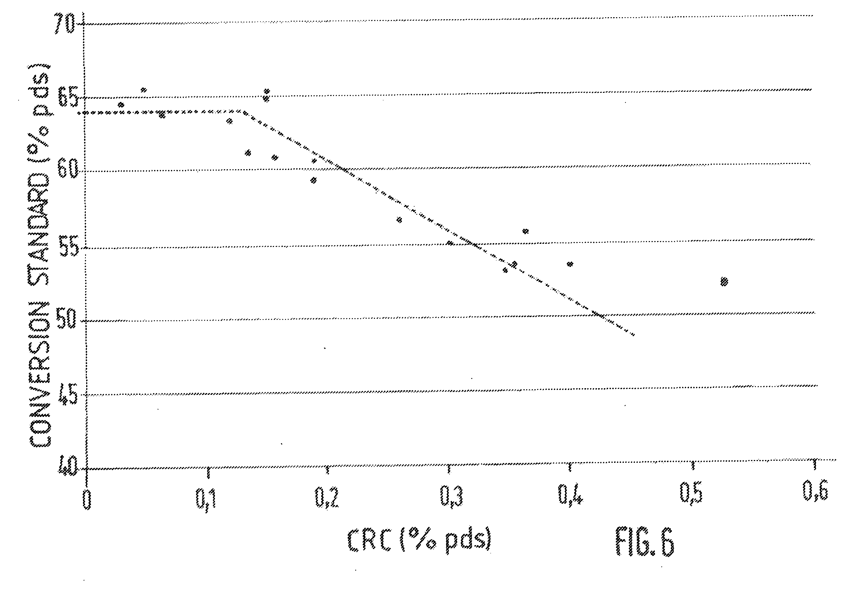

La figure 6 montre l'effet de l'augmentation du CRC en % poids sur le niveau de conversion de la charge dans le réacteur à iso conditions opératoires. Cet effet est obtenu dans le cadre de l'invention par la présence de catalyseur coké dans le réacteur au niveau de l'injection de la charge.

Des exemples sont donnés dans la suite de la présente description visant à illustrer l'efficacité des modifications proposées pour transformer une unité de FCC conçue pour produire essentiellement de l'essence en une unité produisant essentiellement des bases gazoles ou Diesel.

### EXEMPLE 1

Cet exemple montre les résultats comparés obtenus entre l'unité de craquage catalytique classique fonctionnant en mode Maxi essence et l'unité de craquage catalytique ou FCC modifiée selon l'invention, fonctionnant en mode Maxi distillat avec un ou deux réacteurs ascendants.

Il s'agit ici de la modification d'une unité FCC existante qui traite une charge distillat sous vide préalablement hydrotraitée et utilise un catalyseur acide classique, le Conquest d'Albemarle, dont le rapport des surfaces spécifiques microporeux sur mésoporeux est égal à 2.

Pour augmenter la production de distillat tout en minimisant celle d'essence légère, nous avons modifié les conditions d'opération du FCC, et les points de coupe des effluents produits au niveau du fractionnement primaire. Le catalyseur est inchangé quelles que soient la configuration de l'unité et les conditions d'exploitation. Deux marches de l'unité ont été proposées avec des configurations correspondant aux caractéristiques de l'invention (X1 et X2).

Une première configuration X1 a été faite avec un seul réacteur du type des figures 1 et 2.

Une deuxième configuration X2 comprend un second réacteur ascendant, ce qui permet d'atteindre la production maximale de distillat telle que montré sur la figure 4. Pour ce cas, dont les modifications à apporter sur l'unité de craquage catalytique sont plus conséquentes, il sera nécessaire d'adapter/modifier le fractionnement (4) et les unités de post traitement situées en aval de l'unité de FCC.

Deux essais comparatifs ont également été faits avec un cas de base privilégiant le fonctionnement Maxi Essence (E1) de l'unité, et un fonctionnement (D1) de l'unité dans laquelle on privilégie la production de distillat sans changement de configuration (principalement via la baisse de la température de réaction).

Les résultats et conditions d'exploitation des unités sont donnés dans les tableaux I et II ci-après. Dans ces tableaux, les valeurs « base » sont des valeurs de référence par rapport auxquelles le gain de l'invention est comparé.

**TABLEAU I**

| | | E1 | **D1** | **X1** | **X2** |
|---|---|---|---|---|---|
| Débit de charge | t/h | Base | Base | Base | Base |
| **Point final de distillation de la coupe** | | | | | |
| Point final : LCN | °C | 157 | 153 | 145 | 145 |
| Point final: HCN | °C | 218 | 214 | 210 | 210 |
| Point final: LCO | °C | **299** | **303** | **400** | **395** |
| Point final: HCO | °C | **398** | **415** | **455** | **460** |
| Point initial: slurry | °C | 398+ | 415+ | 455+ | 460+ |

| **RECYCLES** | | | | | |
|---|---|---|---|---|---|
| **Position** | | **non** | **non** | **réacteur principal** | 2^{ème} **réacteur** dédié |
| Débit total de recycle | t/h | | | 50 | 120 |
| **type** | | | | **LCN+HCO** | **LCN+HCO** |

| **CONDITIONS OPERATOIRES** | | | | | |
|---|---|---|---|---|---|
| C/O Réacteur principal | - | 6,5 | 5,7 | 5,8 | 5,7 |

| **TRX** | **°C** | **Base** | **Base-23** | **Base -27** | **Base -27** |
|---|---|---|---|---|---|
| T°C / phase dense (=T_ReG) | °C | 715 | 706 | 692 | 697 |
| Enrichissement O₂ | Nm³ /h | 0 | 0 | 1500 | 9000 |
| Soufflage d'air humide | t/h | Base | Base+7 | Base+7 | Base+7 |
| Second réacteur C/O | - | **na** | na | **na** | **15** |
| TRX second réacteur | °C | | | | **614** |
| Charge du réacteur principal | t/h | Base | Base | Base+50 | Base+120 |

| | | | | | |
|---|---|---|---|---|---|
| na : Non applicable | | | | | |

**TABLEAU II**

| | | E1 | D1 | XI | X2 |
|---|---|---|---|---|---|
| **Rendements produits ex unité** | | | | | |
| Gaz secs | % | 3,0% | 2,5% | 2,5% | 3,2% |
| C3 | % | 8,0% | 7,0% | 8,0% | 7,5% |
| C4 | % | 14,0% | 11,0% | 13,0% | 11,8% |
| LPG | % | 22,0% | 18,0% | 21,0% | 19,3% |
| LCN | % | **43,0%** | **37,0%** | **23,6%** | **8,8%** |
| HCN | % | **10,0%** | 13,0% | **15,3%** | **18,0%** |
| LCO | % | **6,0%** | **12,0%** | **27,4%** | **34,7%** |
| HCO | % | **7,0%** | **9,0%** | **2,3%** | **7,3%** |
| Slurry | % | **4,0%** | **3,5%** | **3,0%** | **2,9%** |
| Coke | % | 5,0% | 5,0% | 5,0% | 6,0% |
| Conversion Standard | % | 81% | 77% | 68% | 62% |

| **Propriétés des produits** | | | | | |
|---|---|---|---|---|---|
| Cetane HCN | ASTM D4737 | **21,6** | **22,6** | **23,8** | **26,3** |
| Cetane LCO | ASTM D4737 | **16,3** | **22,7** | **29,5** | **36** |
| Cetane HCO | ASTM D4737 | 14,7 | **19,5** | 17,4 | 27,7 |
| Densité Slurry à 15°C | kg/l | 1,096 | 1,047 | 1,022 | 0,984 |

Il est clairement observé des tableaux I et II que, grâce à la baisse du niveau de conversion de la charge combinée à la modification des points de coupe au fractionnement primaire et du recycle des coupes non désirées vers la zone réactionnelle, il est possible de maximiser la production de distillat et minimiser celle de slurry et d'essence, tout en conservant des qualités de produit équivalentes voire améliorées en termes de densité et d'indice de cétane comparativement au cas de base.

### EXEMPLE 2 :

Cet exemple montre à partir de résultats obtenus sur unité pilote, les différents jeux de rendements que l'on peut obtenir pour une charge composée uniquement de résidu atmosphérique, en fonction des conditions opératoires et de l'utilisation de recycle de catalyseur du séparateur et de recycle de fractions non converties.

Le catalyseur est un catalyseur conventionnel dédié à la production d'essence à partir de charge lourde type résidu atmosphérique (ratio des surfaces spécifiques microporeuse sur mésoporeuse égal à 1, surface totale = 110 m²/g, Ni = 3000 ppm poids et V = 5000 ppm poids). La charge est un résidu atmosphérique de point d'ébullition compris entre 330 et 730°C avec une masse volumique de 928.9 kg/m3 et un carbone Conradson de 3.9 % poids).

Dans cet exemple, le cas 1 correspond à un mode de fonctionnement dit essence favorisant la production d'essence légère et lourde et de gaz liquéfiés (LPG en anglais). C'est le cas de référence de cette comparaison.

Le cas 2 décrit un fonctionnement en mode distillat en prenant en compte, par rapport au cas 1, la variation des conditions opératoires. C'est le moyen d'augmenter le rendement en distillat sans aucune modification de l'unité, ici le paramètre principal est la baisse de la température de réaction (TRX) de 23°C. La baisse de conversion standard, définie comme 100 - (rendements en LCO + slurry), est de 10 points. Elle est uniquement de 3 points pour la conversion liquide (LPG + essence légère + essence lourde + LCO = somme des produits valorisables). Il en résulte également une augmentation du distillat, somme LCO + essence lourde, de 5 points au détriment de l'essence légère principalement. L'autre conséquence est l'augmentation du slurry peu valorisable (+5.5 points).

Le cas 3 correspond au cas 2 pour lequel une partie du catalyseur du séparateur, catalyseur considéré comme faiblement actif en raison d'un CRC élevé, a été recyclé dans le réacteur pour réduire l'activité globale du catalyseur mis en contact avec la charge. Via un recycle d'environ 30% poids, le delta coke moyen du mélange de catalyseur est de 0.35% poids. Cela permet de réduire la conversion standard de 12 points dans ce cas (8 pour la conversion liquide). Le gain en distillat, de 2.6 points, reste conséquent bien que plus modeste que pour le passage du cas 1 au cas 2. En revanche, la pénalité sur le slurry devient très forte (+10 points).

Le cas 4 reprend le cas 3 pour lequel un second réacteur a été ajouté afin de traiter l'excédent de slurry, ici 83% du slurry produit au cas 3 en privilégiant le recycle de la fraction légère du slurry (350-460°C) dans sa totalité, et une partie de la fraction lourde. Les conditions du second riser sont fixées pour favoriser la conversion de ce recycle, ici C/O de 10 avec un catalyseur complètement régénéré et une température de réaction de 565°C. La conséquence du recycle est une diminution du rendement en slurry (-12.8 points versus cas 3 et même - 2.9 points versus cas 2) pour un rendement final en distillat de 43.8 points, soit une amélioration vis-à-vis des cas 1 et 2 de respectivement de 14.4 points et 9.4 points. De plus, cela permet de conserver la conversion liquide par rapport au mode essence.

La combinaison des recycles de catalyseur et de slurry, associée à une baisse de la sévérité des conditions opératoires permet, à points de coupe inchangés, d'adapter la sélectivité de l'unité FCC entre mode maxi essence et mode maxi distillat.

**Tableau III**

| | **Cas 1** | **Cas 2** | **Cas 3** | **Cas 4** |
|---|---|---|---|---|
| Mode | Essence | Distillat | Distillat | Distillat |
| TRX | 518 | 495 | 490 | 490 |
| C/O réacteur principal | 7 | 5 | 6 | 6 |
| Recycle de catalyseur issu du séparateur (%) | - | - | Oui | Oui |
| Recycle 2^{ème} réacteur | - | - | - | Oui (83% du slurry cas 3) |

| **Structure de rendement sur base de la charge principale (%pds)** | | | | |
|---|---|---|---|---|
| Conversion standard | 76 | 66 | 54 | 61 |
| Conversion liquide | 79 | 76 | 68 | 79 |
| Distillat (150-360°C) | 29.4 | 34.4 | 37.0 | 43.8 |
| Gaz secs | 4.2 | 3.2 | 2.5 | 2.8 |
| GPL | 15.4 | 11.3 | 6.6 | 8.2 |
| Essence légère (15-150°C) | 34.4 | 29.8 | 24.0 | 26.9 |
| Essence lourde (150-220°C) | 12.6 | 13.5 | 13.5 | 14.9 |
| LCO (220-350°C) | 16.8 | 20.9 | 23.5 | 28.9 |
| Slurry (350+°C) | 7.6 | 13.1 | 23.0 | 10.2 |
| Coke | 9 | 8.2 | 6.9 | 8.0 |

### EXEMPLE 3 :

Le présent exemple démontre l'avantage de l'invention à utiliser des catalyseurs de craquage conventionnels, qui favorisent la production d'essence en raison d'une surface spécifique micro poreuse, ou encore zéolithique, élevée, caractérisés par un ratio surface spécifique micro poreuse sur surface spécifique méso poreuse typiquement supérieur à 2, comparativement à un catalyseur complètement amorphe, ne présentant qu'une surface spécifique méso poreuse et dépourvu de surface spécifique micro poreuse, connu commercialement sous le nom de BCA (Bottom Cracking Additive ou additif de craquage de fond), qui favorise la production de LCO au détriment du slurry dans les mêmes conditions de craquage telles que revendiquées pour l'invention.

Les conditions opératoires (TRX ou température et C/O) sont données dans le tableau IV ci-après. Trois essais ont été réalisés avec un catalyseur zéolithique du type de celui décrit dans l'exemple 2 précédent et deux autres avec un catalyseur BCA connu pour privilégier la formation de distillat type LCO.

E1 correspond à un fonctionnement de l'unité en mode essence sur catalyseur zéolithique,

D1 correspond à un fonctionnement de l'unité en mode distillat sur catalyseur zéolithique sans recycle avec uniquement un abaissement de la température de craquage,

D2: correspond à un fonctionnement de l'unité en mode distillat sur catalyseur zéolithique avec recycle de slurry en amont de l'injection de charge selon l'invention se traduisant par un cokage partiel du catalyseur avant injection de la charge fraiche,

D'1 correspond à un fonctionnement de l'unité en mode distillat sur un catalyseur système BCA sans recycle, et

D'2 correspond à un fonctionnement de l'unité en mode distillat sur un catalyseur système BCA avec recycle identique au cas D2 ci-dessus.

| Catalyseur | Z | | | Amorphe | |
|---|---|---|---|---|---|
| Mode | E1 | D1 | D2 | D'1 | D'2 |
| TRX | 518°C | 505°C | 505°C | 505°C | 505°C |
| Recyle en amont injection de charge | non | non | | non | |
| Débit de recycle (360+) en pourcentage du débit de charge fraiche | | | **5%** | | **5%** |
| Gas secs | 2,2 | 2,0 | 2,3 | 2,0 | 2,1 |
| GPL | 24,0 | 21,3 | 22,1 | 12,1 | 10,5 |
| Essence légère (C5-160°C) | 44,0 | 41,4 | 42,5 | 23,7 | 27,4 |
| Essence lourde (160-220°C) | 8,0 | 10,6 | 11,3 | 9,6 | 9,8 |
| LCO (221-360°C) | 12,7 | 14,1 | 14,9 | 21,3 | 21,7 |
| Slurry 360+ | 5,2 | 6,2 | 2,4 | 27,3 | **24,7** |
| Coke | 3,9 | 4,4 | 4,5 | 4,0 | 3,8 |
| Conversion -221 | 82,1 | 79,7 | 82,7 | 51,4 | 53,7 |
| Conversion liquide | 88,7 | 87,4 | 90,8 | 66,7 | 69,4 |
| C/O (charge fraiche) | 5,5 | 5,5 | 5,5 | 5,5 | 5,5 |
| HCN+LCO (distillat) | 20,7 | 24,7 | **26,2** | 30,9 | **31,5** |

En présence de catalyseur zéolithique, la baisse de la température de craquage dans le réacteur conduit à une augmentation de distillat recherché mais en détériorant la conversion liquide en raison de la forte augmentation de la quantité de slurry non valorisable. L'ajout d'un recycle de slurry au réacteur permet non seulement d'augmenter encore plus la quantité de distillat produite mais aussi d'augmenter mécaniquement la conversion liquide par destruction du slurry ainsi recyclé. Sur catalyseur amorphe type BCA, qu'il y ait ou non recycle selon l'invention, la quantité de slurry formé est plus de dix fois supérieure à celle formée dans le cas d'un catalyseur zéolithique avec recycle. En outre, le taux de conversion liquide est très inférieur à celui du procédé selon l'invention.

## Revendications

1. Procédé de craquage catalytique pour maximiser la production de bases gazoles comprenant une étape de réaction de craquage dans un réacteur à lit fluidisé ascendant, une étape de séparation des hydrocarbures craqués et du catalyseur coké, une étape de fractionnement des hydrocarbures craqués et une étape de régénération du dit catalyseur coké, **caractérisé en ce que** on injecte la charge hydrocarbonée dans le réacteur ascendant sur un catalyseur partiellement désactivé par cokage préalable d'au moins une partie de celui-ci dans ce même réacteur ascendant, de façon à ce que la température de réaction des effluents en sortie du dit réacteur varie de 470 à 600°C, ce cokage préalable étant réalisé par injection d'au moins un composé hydrocarboné de température d'ébullition supérieure ou égale à 350°C, sur au moins une partie du catalyseur régénéré délimitée par au moins une zone définie au moyen d'un dispositif interne disposé dans le fond du réacteur ascendant, la charge hydrocarbonée à traiter étant injectée en aval de l'extrémité supérieure dudit dispositif dans ledit réacteur par rapport au sens de circulation du catalyseur dans le réacteur.

2. Procédé selon la revendication 1 **caractérisé en ce qu'**une partie du catalyseur coké, séparé puis strippé au cours de l'étape de séparation est renvoyé directement dans le réacteur ascendant en amont, au niveau et/ou en aval de l'injection de charge hydrocarbonée à une température égale ou inférieure à la température de réaction.

3. Procédé selon l'une des revendications précédentes **caractérisé en ce qu'**une partie du catalyseur régénéré, délimitée par au moins une zone définie au moyen dudit dispositif interne, est coké en amont de l'injection de la charge par au moins un composé hydrocarboné de température d'ébullition supérieure ou égale à 350°C et qu'une partie du catalyseur coké et strippé, récupéré dans le séparateur est également renvoyé en amont, au niveau et/ou en aval de l'injection de la charge dans le réacteur.

4. Procédé selon les revendications 1 à 3 **caractérisé en ce qu'**on recycle de 1 à 100% d'au moins un composé hydrocarboné de température d'ébullition supérieure ou égale à 350°C, produit en sortie de l'étape de fractionnement, sur 1 à 100% en poids de catalyseur régénéré introduit en fond de réacteur ascendant.

5. Procédé selon l'une des revendications précédentes **caractérisé en ce que** 1 à 75% en poids du catalyseur coké et strippé récupéré dans l'étape de séparation est recyclé dans le réacteur en amont, au niveau et/ou en aval de l'injection de la charge.

6. Procédé selon l'une des revendications précédentes **caractérisée en ce que** on injecte, en amont de l'injection de la charge dans le réacteur ascendant, au moins une coupe de température d'ébullition inférieure à 160°C sur du catalyseur régénéré.

7. Procédé selon l'une des revendications précédentes **caractérisée en ce qu'**il comprend une étape de réaction de craquage supplémentaire en réacteur ascendant, travaillant en parallèle à la première étape de craquage, et dans laquelle on recycle sur du catalyseur régénéré des coupes hydrocarbonées de point d'ébullition inférieur ou égal à 160°C, et de préférence inférieur à 145°C, et/ou des coupes hydrocarbonées de température d'ébullition supérieure ou égale à 330°C, de préférence supérieure à 350°C.

8. Procédé selon la revendication 7 **caractérisé en ce que** les coupes hydrocarbonées sont choisies parmi les effluents issus de l'étape de fractionnement, des unités de conversion et/ou de distillation de pétrole brut, y compris des coupes dérivées de la biomasse.

9. Procédé selon les revendications 7 et 8 **caractérisé en ce que** on opère dans ce deuxième réacteur ascendant dans des conditions sévères de craquage avec un C/O variant de 4 à 20 pour des températures de réaction entre 470 et 650°C.

10. Dispositif de mise en oeuvre du procédé de craquage selon l'une des revendications de 1 à 9 comprenant au moins un réacteur ascendant (1) équipé d'un injecteur de charge et d'un dispositif interne (9) disposé en fond du réacteur proche de l'arrivée de catalyseur régénéré, un séparateur (2) des effluents de craquage et du catalyseur coké, un régénérateur (3) et un dispositif de fractionnement (4), ces différents dispositifs étant reliés pour permettre la circulation des fluides et du catalyseur entre eux, **caractérisé en ce qu'**il comprend au moins une première conduite de recycle de coupes hydrocarbonées de température d'ébullition supérieure ou égale à 350°C (12a, 12b) dans le réacteur ascendant à l'intérieur et/ou à l'extérieur d'au moins une zone délimitée par le dispositif interne (9) disposé dans le fond du réacteur en amont de l'injecteur de charge dans ledit réacteur, et éventuellement combiné à au moins une deuxième conduites d'au moins un recycles de coupes hydrocarbonées de point d'ébullition inférieur ou égal à 160°C, et/ou à au moins un moyens de recycle du catalyseur coké et strippé présent dans le séparateur (2) dans le réacteur ascendant (1) en amont, au niveau et/ou en aval de l'injection de charge (10).

11. Dispositif selon la revendication 10, **caractérisé en ce que** le dispositif interne (9) est positionné dans le fond du réacteur ascendant pour définir un compartiment (X) dont la section varie de 10 à 90% de celle du réacteur ascendant, pour une longueur variant de 0.5m à la moitié de la hauteur du dit réacteur ascendant.

12. Dispositif selon l'une des revendications 10 ou 11, **caractérisé en ce que** le dispositif interne (9) est constitué d'un tube disposé co-axialement au réacteur ascendant (1) et/ou au moins d'une plaque de séparation fixée dans le réacteur ascendant parallèle à l'axe de celui-ci, de préférence deux plaques parallèles et/ ou croisées.

13. Dispositif selon la revendication 12, **caractérisé en ce qu'**il comprend une conduite de recycle externe (14) du catalyseur coké et strippé du séparateur (2) vers le réacteur ascendant (1) arrivant en amont (14a), au niveau, et/ou en aval (14b) du niveau d'injection (10) de la charge dans le réacteur (1), cette conduite étant éventuellement équipée d'un refroidisseur (15).

14. Dispositif selon l'une des revendications 10 à 13, **caractérisé en ce que** les parois du réacteur (1) comprennent au moins une ouverture (20) de taille éventuellement variable pour renvoyer directement des grains du dit catalyseur coké et strippé dans le séparateur (2) au niveau du lit dense (23) de ce dernier vers le réacteur (1).

15. Dispositif selon l'une des revendications 10 à 14 **caractérisé en ce qu'**il comprend un deuxième réacteur (16) disposé en parallèle au premier (1) raccordé au régénérateur (3) par sa partie inférieure via une conduite (17) et au séparateur (2) par sa partie supérieure via une conduite (18) et comprenant des conduites d'arrivés des coupes hydrocarbonées (recyclées) (19a, 19b), ces conduites étant disposées le long du dit réacteur, les conduites d'injection (recycle) des distillats de faibles point d'ébullition et les conduites d'injection (recycles) des distillats de températures d'ébullition élevées étant étagées ou non.

## Patentansprüche

1. Katalytisches Crackverfahren zum Maximieren der Herstellung von Gasölbasen mit
einem Schritt der Crackreaktion in einem aufsteigenden Reaktor mit Fließbett,
einem Schritt des Trennens von gecrackten Kohlenwasserstoffen und verkoktem Katalysator,
einem Schritt des Fraktionierens der gecrackten Kohlenwasserstoffe und
einem Schritt des Regenerierens des verkokten Katalysators,
**dadurch gekennzeichnet, dass**
die Kohlenwasserstoffcharge in den aufsteigenden Reaktor auf einen teilweise durch vorausgehende Verkokung zumindest eines Teils desselben in demselben aufsteigenden Reaktor deaktivierten Katalysator eingespritzt wird, so dass die Reaktionstemperatur der Ausflüsse am Ausgang des Reaktors zwischen 470 und 600 °C liegt,
wobei die vorausgehende Verkokung verwirklicht wird durch Einspritzen zumindest einer Kohlenwasserstoffverbindung mit einer Siedetemperatur von größer gleich 350 °C auf zumindest einen Teil des regenerierten Katalysators, der durch zumindest eine Zone begrenzt ist, die durch zumindest eine interne Vorrichtung, die in dem Unterteil des aufsteigenden Reaktors angeordnet ist, definiert ist, und
die zu verarbeitende Kohlenwasserstoffcharge stromabwärts des oberen Endes dieser Vorrichtung mit Bezug auf die Zirkulationsrichtung des Katalysators in dem Reaktor in den Reaktor eingespritzt wird.

2. Verfahren gemäß Anspruch 1, **dadurch gekennzeichnet, dass** ein Teil des verkokten Katalysators, der im Verlauf des Trennschritts abgetrennt und dann gestrippt wird, stromaufwärts, auf dem Niveau und/oder stromabwärts des Einspritzens der Kohlenwasserstoffcharge mit einer Temperatur kleiner gleich der Reaktionstemperatur direkt in den aufsteigenden Reaktor zurückgebracht wird.

3. Verfahren gemäß einem der vorigen Ansprüche, **dadurch gekennzeichnet, dass**
ein Teil des regenerierten Katalysators, der durch die zumindest eine Zone begrenzt ist, die mittels der internen Vorrichtung definiert ist, stromaufwärts des Einspritzens der Charge durch zumindest eine Kohlenwasserstoffverbindung mit einer Siedetemperatur von größer gleich 350 °C verkokt wird, und dass
ein Teil des verkokten und gestrippten Katalysators, der in der Trennvorrichtung wiedergewonnen wird, ebenfalls stromaufwärts, auf dem Niveau und/oder stromabwärts des Einspritzens der Kohlenwasserstoffcharge in den Reaktor zurückgebracht wird.

4. Verfahren gemäß einem der Ansprüche 1 bis 3, **dadurch gekennzeichnet, dass** von 1 bis 100% zumindest einer Kohlenwasserstoffverbindung mit einer Siedetemperatur von größer gleich 350 °C, die am Ausgang des Fraktionierungsschritts gewonnen wird, auf 1 bis 100 Gew.-% regenerierten Katalysators, der in den Unterteil des aufsteigenden Reaktors eingebracht wird, wieder zugeführt werden.

5. Verfahren gemäß einem der vorigen Ansprüche, **dadurch gekennzeichnet, dass** 1 bis 75 Gew.-% verkokten und gestrippten Katalysators, der in dem Trennschritt wiedergewonnen wird, stromaufwärts, auf dem Niveau und/oder stromabwärts des Einspritzens der Charge dem Reaktor wieder zugeführt werden.

6. Verfahren gemäß einem der vorigen Ansprüche, **dadurch gekennzeichnet, dass** stromaufwärts des Einspritzens der Charge in den aufsteigenden Reaktor zumindest ein Verschnitt mit einer Siedetemperatur von weniger als 160 °C auf den regenerierten Katalysator eingespritzt wird.

7. Verfahren gemäß einem der vorigen Ansprüche, **dadurch gekennzeichnet, dass** es einen Schritt einer ergänzenden Crackreaktion in einem aufsteigenden Reaktor enthält, der parallel zu dem ersten Crackschritt arbeitet und in dem auf einen regenerierten Katalysator Kohlenwasserstoffverschnitte mit einem Siedepunkt von kleiner gleich 160 °C, vorzugsweise kleiner als 145 °C, und/oder Kohlenwasserstoffverschnitte mit einer Siedetemperatur von größer gleich 330 °C, vorzugsweise größer als 350 °C, zurückgeführt werden.

8. Verfahren gemäß Anspruch 7, **dadurch gekennzeichnet, dass** die Kohlenwasserstoffverschnitte gewählt sind aus den Ausflüssen, die aus dem Fraktionierschritt, Konversionseinheiten und/oder der Destillation von Rohöl hervorgehen, und einschließlich Verschnitte, die auf Biomasse zurückgehen.

9. Verfahren gemäß den Ansprüchen 7 und 8, **dadurch gekennzeichnet, dass** in dem zweiten aufsteigenden Reaktor unter schweren Crackbedingungen gearbeitet wird mit einem C/O, der zwischen 4 und 20 liegt für Reaktionstemperaturen zwischen 470 und 650 °C.

10. Vorrichtung zum Durchführen des Crackverfahrens gemäß einem der Ansprüche 1 bis 9, mit
zumindest einem aufsteigenden Reaktor (1), der mit einer Einspritzeinrichtung für Chargen und mit einer internen Vorrichtung (9) versehen ist, die in dem Unterteil des Reaktors nahe an dem Eintritt des regenerierten Katalysators angeordnet ist,
einer Trennvorrichtung (2) für Ausflüsse des Crackens und verkokten Katalysator,
einem Regenerator (3) und
einer Fraktioniervorrichtung (4),
wobei die verschiedenen Vorrichtungen verbunden sind zum Ermöglichen des Zirkulierens von Fluiden und des Katalysators zwischen ihnen,
**dadurch gekennzeichnet, dass**
sie zumindest eine erste Rückflussleitung enthältfür Kohlenwasserstoffverschnitte mit einer Siedetemperatur von größer gleich 350 °C (12a, 12b) in den aufsteigenden Reaktor innerhalb und/oder außerhalb zumindest einer Zone, die durch die interne Vorrichtung (9) begrenzt ist, die in dem Unterteil des Reaktors stromaufwärts der Einspritzeinrichtung für Chargen angeordnet ist, und
möglicherweise kombiniert mit zumindest einer zweiten Leitung zumindest zum Zurückführen von Kohlenwasserstoffverschnitten mit einer Siedetemperatur von kleiner gleich 160°C, und/oder zumindest einem Rückführmittel für verkokten und gestrippten Katalysator, der in der Trennvorrichtung (2) in dem aufsteigenden Reaktor (1) vorhanden ist, stromaufwärts, auf dem Niveau und/oder stromabwärts des Einspritzens der Charge (10).

11. Vorrichtung gemäß Anspruch 10, **dadurch gekennzeichnet, dass** die interne Vorrichtung (9) in dem Unterteil des aufsteigenden Reaktors angeordnet ist zum Bilden eines Abteils (X), dessen Querschnitt zwischen 10 und 90% desjenigen des aufsteigenden Reaktors liegt, über eine Länge, die zwischen 0,5m und der Hälfte der Höhe des aufsteigenden Reaktors liegt.

12. Vorrichtung gemäß einem der Ansprüche 10 oder 11, **dadurch gekennzeichnet, dass** die interne Vorrichtung (9) aus einem Rohr gebildet ist, das koaxial zu dem aufsteigenden Reaktor (1) angeordnet ist, und/oder aus zumindest einer Trennplatte, die in dem aufsteigenden Reaktor parallel zu dessen Achse befestigt ist, vorzugsweise aus zwei parallelen und/oder gekreuzten Platten.

13. Vorrichtung gemäß Anspruch 12, **dadurch gekennzeichnet, dass** sie eine externe Rückflussleitung (14) für verkokten und gestrippten Katalysator von der Trennvorrichtung (2) zu dem aufsteigenden Reaktor (1) enthält, die stromaufwärts (14a), auf dem Niveau und/oder stromabwärts (14b) des Niveaus des Einspritzens (10) der Charge der Charge in den Reaktor (1) ankommt, wobei diese Leitung möglicherweise mit einem Kühler (15) versehen ist.

14. Vorrichtung gemäß einem der Ansprüche 10 bis 13, **dadurch gekennzeichnet, dass** die Wände des Reaktors (1) zumindest eine Öffnung (20) mit einer möglicherweise variablen Größe enthalten, um direkt Körner des verkokten und gestrippten Katalysators in der Trennvorrichtung (2) auf dem Niveau des Festbetts (23) des letzteren zu dem Reaktor (1) zurückzuleiten.

15. Vorrichtung gemäß einem der Ansprüche 10 bis 14, **dadurch gekennzeichnet, dass**
sie einen zweiten Reaktor (16) enthält, der parallel zu dem ersten (1) angeordnet ist, mit dem Regenerator (3) an seinem unteren Abschnitt über eine Leitung (17) und mit der Trennvorrichtung (2) an seinem oberen Abschnitt über eine Leitung (18) verbunden ist und der Zuführleitungen für (rückgewonnene) Kohlenwasserstoffverschnitte (19a, 19b) enthält, wobei diese Leitungen entlang des Reaktors angeordnet sind, Einspritzleitungen (Rückführung) für Destillate mit niedrigem Siedepunkt und Einspritzleitungen (Rückführung) für Destillate mit erhöhtem Siedepunkt seien sie gestaffelt oder nicht.

## Claims

1. A method for catalytic cracking to maximize the production of diesel base stocks, comprising a cracking reaction step in an upflow fluidized bed reactor, a step of separating the cracked hydrocarbons and coked catalyst, a step of fractionating the cracked hydrocarbons and a step of regenerating said coked catalyst, wherein the hydrocarbon feedstock is injected into the upflow reactor on a catalyst partially deactivated by prior coking of at least part thereof in the same upflow reactor, so that the reaction temperature of the effluents leaving said reactor varies from 470 to 600°C,. this prior coking being carried out by injecting at least one hydrocarbon compound having a boiling point equal to or higher than 350°C, on at least part of the regenerated catalyst bounded by at least one zone defined by means of an internal device placed at the bottom of the upflow reactor, the hydrocarbon feedstock to treat being injected upstream from the upper end of the internal device in said reactor relatively to the flow direction of the catalyst inside the reactor.

2. The method as claimed in claim 1, wherein part of the coked catalyst, separated and then stripped during the separation step, is returned directly to the upflow reactor upstream, at and/or downstream of the hydrocarbon feedstock injection point, at a temperature equal to or lower than the reaction temperature.

3. The method as claimed in one of the preceding claims, wherein part of the regenerated catalyst bounded by at least one zone defined by means of said internal device, is coked upstream of the feedstock injection point by at least one hydrocarbon compound having a boiling point equal to or higher than 350°C and wherein part of the coked and stripped catalyst, recovered in the separator, is also sent upstream, at and/or downstream of the feedstock injection point in the reactor.

4. The method as claimed in claims 2 to 4, wherein 1 to 100% of at least one hydrocarbon compound having a boiling point equal to or higher than 350°C, produced at the outlet of the fractionation step, is recycled on 1 to 100% by weight of regenerated catalyst introduced at the bottom of the upflow reactor.

5. The method as claimed in one of the preceding claims, wherein 1 to 75% by weight of the coked and stripped catalyst recovered in the separation step is recycled to the upflow reactor upstream, at and/or downstream of the feedstock injection point.

6. The method as claimed in one of the preceding claims, wherein at least one cut having a boiling point lower than 160°C is injected on regenerated catalyst upstream of the feedstock injection point in the upflow reactor.

7. The method as claimed in one of the preceding claims, which comprises an additional cracking reaction step in an upflow reactor, operating in parallel to the first cracking step, and in which hydrocarbon cuts having a boiling point equal to or lower than 160°C, and preferably lower than 145°C, and/or hydrocarbon cuts having a boiling point equal to or higher than 330°C, preferably higher than 350°C, are recycled on regenerated catalyst.

8. The method as claimed in claim 7, wherein the hydrocarbon cuts are selected from the effluents produced by the fractionation step, and from crude oil conversion and/or distillation units, including cuts derived from biomass.

9. The method as claimed in claims 7 and 8, wherein operations in this second upflow reactor are carried out in severe cracking conditions with a C/O ranging from 4 to 20 for reaction temperatures between 470 and 650°C.

10. A device for implementing the cracking method as claimed in one of claims 1 to 9, comprising at least one upflow reactor (1) equipped with a feedstock injector and an internal device (9) placed at the bottom of the reactor close to the regenerated catalyst inlet, a separator (2) of the cracking effluents and coked catalyst, a regenerator (3) and a fractionation device (4), these various devices being connected to allow for the circulation of the fluids and of the catalyst between them, which comprises at least one first line for recycling hydrocarbon cuts having a boiling temperature superior or equal to 350°C (12a, 12b) to the upflow reactor inside and/or outside at least one zone bounded by the internal device (9) placed at the bottom of the reactor upstream from the feedstock injector in said reactor, and eventually combined with at least one second line for at least one recycling of hydrocarbon cuts having a boiling point equal to or lower than 160°C, and/or with at least one means for recycling the coked and stripped catalyst present in the separator (2) to the upflow reactor (1) upstream, at and/or downstream of the feedstock injection point (10).

11. The device as claimed in claim 10, wherein the internal device (9) is positioned in the bottom of the upflow reactor so as to define a compartment (X) whereof the cross section varies from 10 to 90% of that of the upflow reactor, for a length varying from 0.5 m to half of the height of said upflow reactor.

12. The device as claimed in either of claims 10 and 11, wherein the internal device (9) consists of a tube placed coaxially with the upflow reactor (1) and/or at least one separation plate fixed in the upflow reactor parallel to the axis thereof, preferably two parallel and/or intersecting plates.

13. The device as claimed in claim 12, which comprises an external line (14) for recycling coked and stripped catalyst from the separator (2) to the upflow reactor (1) arriving upstream (14a), at and/or downstream (14b) of the feedstock injection point (10) in the reactor (1), this line being optionally equipped with a cooler (15).

14. The device as claimed in one of claims 10 to 13, wherein the walls of the reactor (1) comprise at least one opening (20) having an optionally variable size for directly sending grains of said coked and stripped catalyst in the separator (2) at the dense bed (23) thereof to the reactor (1).

15. The device as claimed in one of claims 10 to 14, which comprises a second reactor (16) placed parallel to the first (1), connected to the regenerator (3) by its lower portion via a line (17) and to the separator (2) by its upper portion via a line (18) and comprising inlet lines for (recycled) hydrocarbon cuts (19a, 19b), these lines being placed along said reactor, the injection (recycle) lines of the low boiling point distillates and the injection (recycle) lines of the high boiling point distillates being optionally staged.
